Europäisches Patentamt

(19) European Patent Office

Office européen des brevets

(11) Publication number : **0 371 142 B1**

(12) **EUROPEAN PATENT SPECIFICATION**

(45) Date of publication of patent specification :
07.12.94 Bulletin 94/49

(51) Int. Cl.[5] : **G05B 19/18,** G05B 19/403, G05B 19/42

(21) Application number : **89904613.0**

(22) Date of filing : **17.04.89**

(86) International application number :
**PCT/JP89/00410**

(87) International publication number :
**WO 89/10588 02.11.89 Gazette 89/26**

(54) **METHOD OF CORRECTING LOCI OF AN INDUSTRIAL ROBOT.**

(30) Priority : **27.04.88 JP 102394/88**

(43) Date of publication of application :
**06.06.90 Bulletin 90/23**

(45) Publication of the grant of the patent :
**07.12.94 Bulletin 94/49**

(84) Designated Contracting States :
**DE FR GB**

(56) References cited :
**FR-A- 2 544 889**
**JP-A-63 133 208**
**US-A- 4 380 696**
**US-A- 4 568 816**
**US-A- 4 675 502**
**PATENT ABSTRACTS OF JAPAN vol. 10, no. 202 (P-477)(2258) 15 July 1986, & JP-A-61 45306**
**PATENT ABSTRACTS OF JAPAN vol. 10, no. 143 (P-459)(2200) 27 May 1986; & JP-A-60262215**

(56) References cited :
**Paul R.P.: "Robot Manipulators : Mathematics, Programming and Coontrol"**
**1981,Massachusetts Institute of Technology, Cambridge, US**
**PATENT ABSTRACTS OF JAPAN vol. 10, no. 55 (M-458)(5112) 05 March 1986, & JP-A-60 203368**
**PATENT ABSTRACTS OF JAPAN vol. 9, no. 186 (P-377)(1909) 02 August 1985, & JP-A-60 55407**

(73) Proprietor : **FANUC LTD.**
**3580, Shibokusa Aza-Komanba, Oshino-mura Minamitsuru-gun, Yamanashi 401-05 (JP)**

(72) Inventor : **HARA, Ryuichi Room 7-206, Fanuc Manshonharimomi**
**3539-1, Shibokusa**
**Oshino-mura**
**Minamitsuru-gun Yamanashi 401-05 (JP)**

(74) Representative : **Billington, Lawrence Emlyn et al**
**HASELTINE LAKE & CO**
**Hazlitt House**
**28 Southampton Buildings**
**Chancery Lane**
**London WC2A 1AT (GB)**

## Description

The present invention relates to a locus correcting method for industrial robots.

In industrial robots, it is known to preliminarily teach a movement locus (target movement locus) that a work point of a robot should follow during operation by using a fixed coordinate system such as a work coordinate system set for a subject to be processed by the robot or a base coordinate system set for the robot body, and effect playback control of the robot to move the work point of the robot along the target locus. However, during execution of the work, if the position of the subject of work is deviated from the setting position thereof at the time of teaching, the taught locus is also deviated from the target locus. In this case, there occurs a deviation of the actual locus of the work point from the target locus even though the work point is moved exactly along the taught locus, thus making the work inaccurate. Conventionally, when such a deviation occurs, a deviation in the fixed coordinate system is detected and the position of the work point is corrected such that the actual locus coincides with the target locus. However, to detect a deviation in the fixed coordinate system, a sensor system must be constructed so as to cover the entire work region of the robot. Further, when the position of the subject of work is moved frequently during the work, the position of the work point must be corrected each time the subject is moved, whereby the load of information processing of the robot is increased.

An object of the present invention is to provide a locus correcting method for industrial robots, which can be executed with a simplified sensor system and can reduce the load of information processing of the robot.

A further approach, specifically to the problem of deviation of a welding robot from a taught path, is disclosed in related patent publications US-A-4380696 and US-A-4568816. According to this published prior art, a welding path is initially taught using the workpiece itself to define the reference coordinate system wherein the welding path is taught. Before welding takes place, and with the workpiece located in the position for welding, the welding gun (including a camera) is traversed along the taught welding path and any positional difference between the taught path and the actual welding groove is detected by the camera and stored. This difference is then employed to correct the taught welding path, and then the welding gun again moves along the workpiece and welding takes place along the correct welding groove. Thus the correction procedure disclosed in this prior art is carried out as a time-consuming operation separate from and prior to the actual welding.

According to the present invention there is provided a locus correcting method for an industrial robot, comprising the steps of:

(a) teaching a target movement locus for a work point of the robot, by using a reference coordinate system;

(b) subsequently operating the robot to follow the taught target movement locus on a workpiece whilst detecting an error between a current moving position of the work point and the target movement locus;

(c) converting the error detected in said step (b) into a correction amount in the reference coordinate system; and

(d) correcting the position of the work point by using said correction amount;

characterised in that:

in step (a) the reference coordinate system is a fixed coordinate system;

said operation of the robot in which the robot follows the taught target movement locus, whilst detecting an error between a current moving position of the work point and the target movement locus, is an operation wherein the robot operates on the workpiece and wherein steps (b), (c) and (d) are performed together;

said error is detected periodically as the robot work point moves along said target movement locus whilst the robot operates on the workpiece;

in step (b) said error is detected by using a predetermined coordinate system, different from said fixed coordinate system, defined by the current moving position and current moving direction of the work point; and

in step (c) said error before conversion is represented in said predetermined coordinate system.

As described above, according to the present invention, the position of the work point is corrected in accordance with the correction amount which is obtained through a conversion of an error between the current moving position of the work point periodically detected by using the predetermined coordinate system defined by the current moving position and the current moving direction of the robot work point and the target movement locus taught by using the fixed coordinate system. Accordingly, deviation of the actual movement locus of the work point of the industrial robot from the target movement locus can be easily detected even by a simplified sensor system, and the load of information processing of the robot can be reduced. whereby correction of the movement locus of the robot work point can be carried out easily and immediately.

## Brief Description of the Drawings

Fig. 1 is a diagram illustrating a predetermined coordinate system used in a locus correcting method according to an embodiment of the present invention;

Fig. 2 is a block diagram illustrating a principal part of a robot to which the method according to the embodiment is applied;

Fig. 3 is a flowchart of a program for locus correction control, executed by the robot of Fig. 2; and

Fig. 4 is a diagram illustrating a locus correction effected by the robot of Fig. 2.

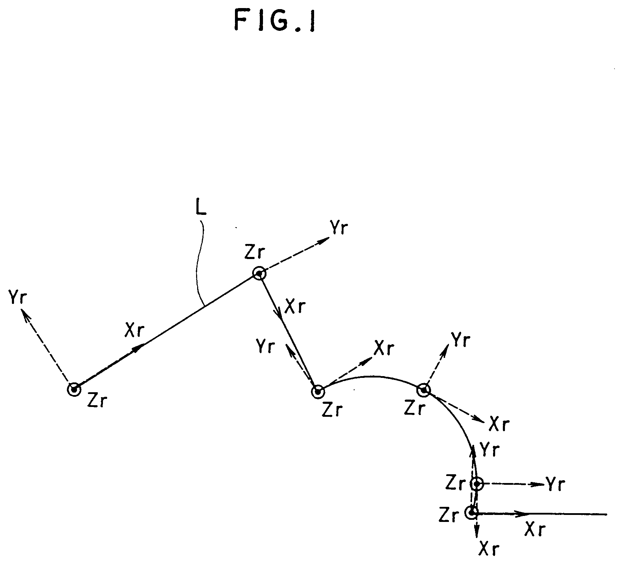

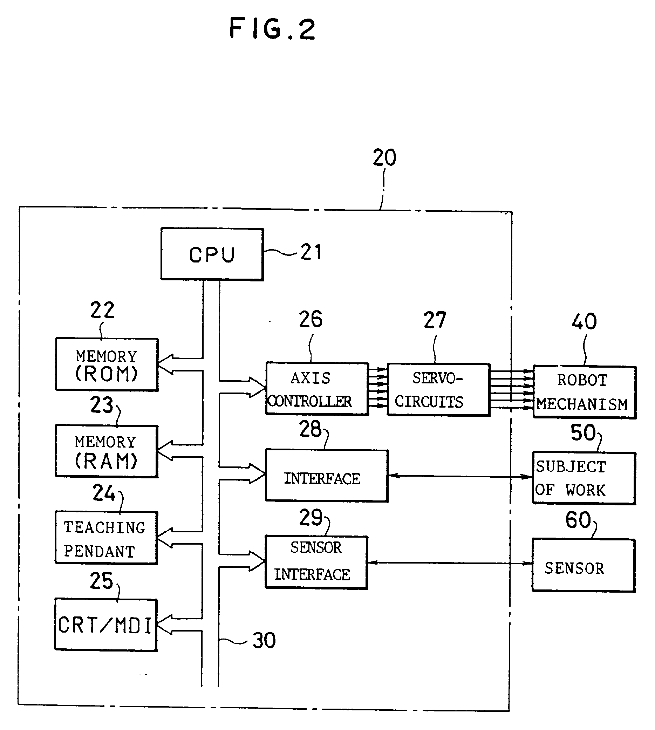

In Fig. 2, an industrial robot, having an arrangement basically similar to that of a prior art robot, comprises a control unit 20, a robot mechanism 40 for processing a subject 50 of work under the control of the control unit 20, and a sensor system 60 for detecting operating conditions of various parts of the mechanism 40. The robot mechanism 40 of this embodiment, including a set of arms adjacent ones of which are coupled to each other by a joint whose joint angle is variably controlled by a servomotor, and a welding torch (tool) mounted to a distal end of an arm, for instance, is so arranged as to move the welding torch along a groove line of the workpiece (subject of work) 50, i.e., along a target movement locus of the distal end of the welding torch (the work point of the robot), to carry out arc welding. The sensor system 60 includes a visual sensor (camera) mounted to the distal end of the arm, to detect an error between the distal end of the welding torch and the groove line by means of the camera. Specifically, the camera is arranged such that a field of view thereof covers at least the distal end of the welding torch and part of the groove line close to the torch end, to detect an error between the current moving position of the distal end of the torch and the groove line in a predetermined coordinate system (Xr, Yr, Zr), such as one shown in Fig. 1, which is defined by the current moving position and current moving direction of the distal end of the torch. In Fig. 1, the predetermined coordinate system (Xr, Yr, Zr) is set such that an origin thereof coincides with the current moving position of the distal end of the torch, an Xr axis thereof extends in the current moving direction of the torch end (the direction in which the taught locus extends), a Zr axis thereof extends in a direction perpendicular to the groove line of the workpiece (perpendicular to and upward from the surface of the drawing of Fig. 1), and a Yr axis thereof extends perpendicular to both the Xr and Zr axes and defined by a right-handed coordinate system.

A central processing unit (hereinafter referred to as CPU) of the control unit 20 is connected through a bus 30 to a memory 22 composed of a ROM, a memory 23 composed of a RAM, a teaching pendant 24, and a manual data input device with a CRT display (hereinafter referred to as CRT/MDI) 25. The memory 22 is stored with various control programs executed by the CPU 21, and the memory 23 is arranged to be stored with a program taught through the teaching pendant 24 and the CRT/MDI 25, and stored with an off-line prepared robot operation program through a tape reader (not shown).

The teaching pendant 24 has a numerical display unit, lamps, operating buttons, etc. that are necessary for the manipulation of the robot. The CRT/MDI 25 has a mode selection key, character/numeral entry keys, cursor keys, and various function keys. Further, the robot is arranged to be supplied with command data through the teaching pendant 24 and the CRT/MDI 25.

The CPU 21 is also connected through the bus 30 to an axis controller 26 including an interpolator, an interface 28 for exchange of signals with a sensor system (not shown) etc. associated with the work subject 50, and a sensor interface 29 connected to the sensor system 60. Servomotors for individual axes of the robot mechanism 40 are arranged to be driven by servo-circuits 27 connected to the axis controller 26.

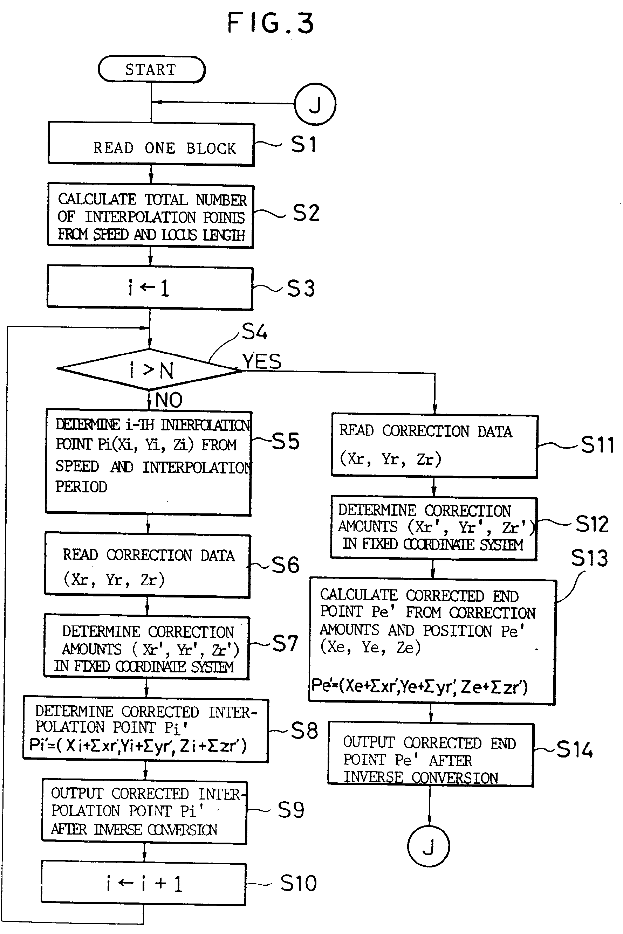

Now, a locus correcting method for robots, according to an embodiment of the present invention will be described with reference to Fig. 3.

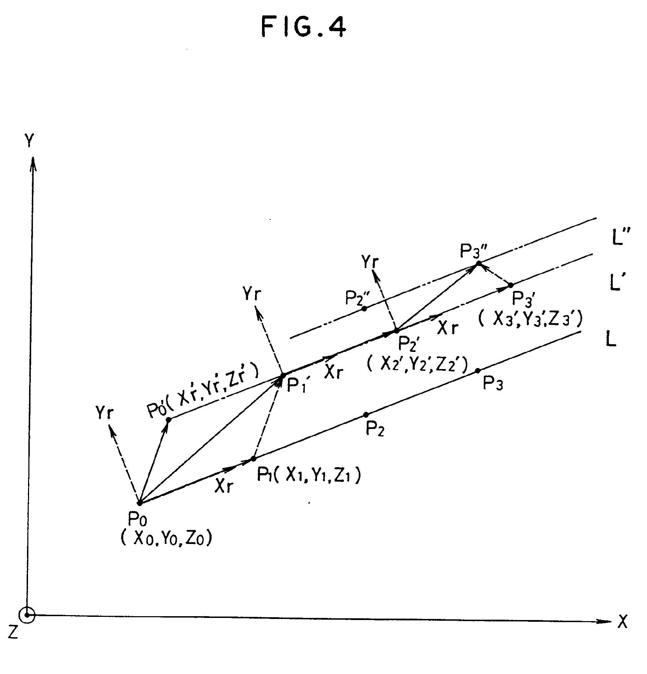

Before operating the robot, an operator sets a workpiece to be welded, which is a subject of work, in a predetermined positional relation to the body of the robot. Then, the operator operates the teaching pendant 24 and the CRT/MDI 25 to teach the robot a target movement locus (groove line) that the distal end of the torch should follow during the work, by using a fixed coordinate system (X, Y, Z) shown in Fig. 4, e.g., a base coordinate system.

As the operator inputs an operation start command to the robot, the CPU 21 reads out the first one block from a teaching program stored in the memory 23 (Step S1), and drives the robot mechanism 40 to bring the distal end of the torch to the start point of the target movement locus (taught locus) represented by the fixed coordinate system (X, Y, Z). The CPU 21 then calculates the length of the movement locus of this block in accordance with the start point (generally, current moving position P0) and a target moving position specified in the block concerned and represented by the fixed coordinate system, to obtain a total number N of interpolation points for this block, by dividing the calculated locus length by a movement speed $\underline{v}$ specified in the program (Step 2).

After an index $\underline{i}$ (= 1, 2, ..., N) is set to "1" (Step S3), it is determined whether the index $\underline{i}$ is greater than the total number N of interpolation points (Step S4). Here, since i = 1 (< N), the program proceeds to Step S5 in which the position P1 of the first interpolation point (generally, position Pi of the i-th interpolation point) in the fixed coordinate system (X, Y, Z) is calculated on the basis of the commanded movement speed $\underline{v}$ and an interpolation period T, and in accordance with the following equation (1),

$$P_i = P_{i-1} + v \cdot T \quad (1)$$

Next, the CPU 21 reads out through the sensor interface 29 an output (correction data) of the camera of the sensor system 60, which output represents a deviation (xr, yr, zr) of the current moving position of the torch end (here, the start point P0 of the target locus as taught) from the groove line (target locus) in the predetermined coordinate system $(Xr, Yr, Zr)$ (Step S6). The correction data represented by the predetermined coordinate system is converted into correction amounts $(xr', yr', zr')$ represented by the fixed coordinate system, by means of a coordinate system conversion process conventionally known (Step S7), and these correction amounts are added to cumulative correction amounts cumulated by then, to obtain new cumulative correction amounts $(\Sigma xr', \Sigma yr', \Sigma zr')$. Then, in accordance with equation (2) given below, the new cumulative correction amounts (here, equal to $xr', yr', zr'$, respectively) are added to the position P1 of the first interpolation point obtained in Step S5 at the start point P0, thereby calculating a corrected position P1' of the first interpolation point (generally, corrected position Pi' of the i-th interpolation point) in the fixed coordinate system (Step S8).

$$Pi' = (Xi + \Sigma xr', Yi + \Sigma yr', Zi + \Sigma zr') \quad (2)$$

The CPU 21 then carries out an inverse conversion on the corrected position P1' of the first interpolation point, to calculate angles of rotation of individual axes of the robot mechanism 40 that bring about the corrected position P1', and drives the servomotors of individual axes through the axis controller 26 and the servo-circuits 27 so that the distal end of the torch is moved to the corrected position P1' while the orientation of the torch is held in a predetermined relation relative to the workpiece 50 (Step S9). Then, the index i is incremented (Step S10), and the aforementioned process beginning from Step S4 is repeated until the index i becomes greater than the total number N of interpolation points.

Now, the above locus correcting method will be described in more detail with reference to Fig. 4.

Here, let it be assumed that the distal end of the torch assumes the position P0 (X0, Y0, Z0) in the fixed coordinate system and the target movement locus of the torch end (groove line) is shifted from a taught locus L to a locus L' due to shifting of the position of the workpiece from the setting position at the time of teaching. In this case, as described above, the camera of the sensor system 60 outputs correction data (xr, yr, zr) representing an amount of the above locus shift in the predetermined coordinate system (Xr, Yr, Zr) whose origin corresponds to the current moving position of the torch end and which is determined by the current moving direction of the torch end (taught locus L) and the positional relationship between the torch and the workpiece. The CPU 21 positions the distal end of the torch at the corrected position P1' of the first interpolation point which is equivalent to the sum of the taught position P1 of the first interpolation point and the correction amounts (xr', yr', zr'), as mentioned above. Thus, if the taught locus L is deviated from the target locus L', it is immediately corrected within one period of the correction process by the CPU 21. If the workpiece remains unmoved by the time the distal end of the torch reaches the corrected position P1', correction data (0, 0, 0) is output, and accordingly, the distal end of the torch is moved to the next target position P2' calculated in accordance with the aforesaid equations (1) and (2), without carrying out the locus correction. If the workpiece is moved again during movement of the torch end and accordingly the taught locus is shifted to a target locus L", a position P3" on the locus L" is set as the next target position by using the cumulative correction amounts obtained from the previous two movements of the workpiece, when the target position P2' is reached, whereby the movement of the workpiece is compensated for by the locus correction. The example shown in Fig. 4 does not include rotation of the workpiece, but in the case of a workpiece movement involving rotation, a conventionally known coordinate system conversion including rotation is executed when the predetermined coordinate system is converted to the fixed coordinate system.

Referring again to Fig. 3, the locus correcting process will be described.

If the result of the determination in Step S4 is affirmative (i > N), that is, when the movement control of the torch end is finished for all the interpolation points, the CPU 21 calculates correction amounts $(xr', yr', zr')$ represented by the fixed coordinate system, in accordance with the correction data (xr, yr, zr) read from the sensor system 60 (Steps S11 and S12). Then, new cumulative correction amounts $(\Sigma xr', \Sigma yr', \Sigma zr')$, obtained by adding these correction amounts to the cumulative correction amounts cumulated by then, are added to the position Pe (Xe, Ye, Ze) of the end point of the block read in Step S1, to obtain a corrected position Pe' $(Xe+\Sigma xr', Ye+\Sigma yr', Ze+\Sigma zr')$ of the end point (Step S13). Subsequently, the CPU 21 drives the servomotors of individual axes such that the distal end of the torch is moved to a corrected position Pe' which is obtained through an inverse conversion of the corrected position Pe' of the end point (Step S14). Then, the flow returns to Step S1 to read out the next block, and the aforementioned process is executed for this block.

Although the above embodiment is explained by referring to an arc welding robot, the present invention is not limited to this application alone.

**Claims**

1. A locus correcting method for an industrial robot, comprising the steps of:

(a) teaching a target movement locus (L) for a work point of the robot, by using a reference coordinate system (X,Y,Z);

(b) subsequently operating the robot to follow the taught target movement locus (L) on a workpiece whilst detecting an error between a current moving position of the work point and the target movement locus (L);

(c) converting the error detected in said step (b) into a correction amount in the reference coordinate system (X,Y,Z); and

(d) correcting the position of the work point by using said correction amount;

characterised in that:

in step (a) the reference coordinate system (X,Y,Z) is a fixed coordinate system;

said operation of the robot in which the robot follows the taught target movement locus (L), whilst detecting an error between a current moving position of the work point and the target movement locus (L), is an operation wherein the robot operates on the workpiece and wherein steps (b), (c) and (d) are performed together;

said error is detected periodically as the robot work point moves along said target movement locus (L) whilst the robot operates on the workpiece;

in step (b) said error is detected by using a predetermined coordinate system (Xr,Yr,Zr), different from said fixed coordinate system (X,Y,Z), defined by the current moving position and current moving direction of the work point; and

in step (c) said error before conversion is represented in said predetermined coordinate system (Xr,Yr,Zr).

2. The locus correcting method according to claim 1, wherein said predetermined coordinate system is set such that an origin thereof coincides with the current moving position of the work point, a first coordinate axis thereof extends in the current moving direction of the work point, a second coordinate axis thereof extends in a direction perpendicular to the target movement locus taught in said step (a), and a third coordinate axis thereof extends perpendicular to said first and second coordinate axes.

3. The locus correcting method according to claim 1 or 2, wherein, in said step (d), an inverse conversion is carried out on a corrected position of the work point to determine operating conditions of individual axes of the robot for achieving said corrected position, and the individual axes are driven such that operating conditions thereof are identical to the thus determined operating conditions.

4. The locus correcting method according to claim 1, 2 or 3, wherein detection of the error in said step (b) is carried out by using a sensor whose field of view covers at least the current moving position of the work point and part of the target movement locus close thereto.

**Patentansprüche**

1. Korrekturverfahren zum Korrigieren eines geometrischen Orts für einen industriellen Roboter, das Schritte umfaßt zum

(a) Einlernen eines Zielbewegungsorts (L) für einen Arbeitspunkt des Roboters durch Benutzung eines Bezugs-Koordinatensystems (X,Y,Z),

(b) darauf folgendes Betreiben des Roboters, um dem eingelernten Zielbewegungsort (L) auf einem Werkstück zu folgen, während eine Abweichung zwischen einer augenblicklichen Bewegungsposition des Arbeitspunkts und dem Zielbwegungsort (L) erfaßt wird,

(c) Umsetzen der in Schritt (b) erfaßten Abweichung in einen Korrekturbetrag in dem Bezugs-Koordinatensystem (X,Y,Z) und

(d) Korrigieren der Position des Arbeitspunkts durch Benutzung des Korrekturbetrags,

dadurch **gekennzeichnet**, daß

in Schritt (a) das Bezugs-Kcordinatensystem (X,Y,Z) ein ortsfestes Koordinatensystem ist,

der Betrieb des Roboters, in welchem der Roboter dem eingelernten Zielbewegungsort (L) folgt, während eine Abweichung zwischen einer augerblicklichen Bewegungsposition des Arbeitspunkts und dem Zielbewegungsort (L) erfaßt wird, ein Betrieb ist, bei dem der Roboter auf dem Werkstück arbeitet und bei dem die Schritte (b), (c) und (d) zusammen durchgeführt werden,

die Abweichung periodisch erfaßt wird, wenn sich der Roboter-Arbeitspunkt längs des Zielbewegungsorts (L) bewegt, während der Roboter auf dem Werkstück arbeitet, in Schritt (b) die Abweichung durch Benutzung eines vorbestimmten Koordinatensystems (Xr,Yr,Zr) erfaßt wird, das von dem ortsfesten Koordinatensystem (X,Y,Z) verschieden ist, welches durch die augenblickliche Bewegungsposition und die augenblickliche Bewegungsrichtung des Arbeitspunkts definiert ist, und

in Schritt (c) die Abweichung vor der Umsetzung in dem vorbestimmten Koordinatensystem (Xr,Yr,Zr) dargestellt ist.

2. Korrekturverfahren zum Korrigieren eines geometrischen Orts nach Anspruch 1, bei dem das vorbestimmte Koordinatensystem derart eingestellt ist, daß ein Nullpunkt desselben mit der augenblicklichen Bewegungsposition des Arbeitspunkts zusammenfällt, wobei sich eine erste Koordinatenachse desselben in der augenblicklichen Bewegungsrichtung des Arbeitspunkts erstreckt, eine zweite Koordinatenachse desselben sich in einer Richtung senkrecht zu dem Zielbewegungsort, welcher in Schritt (a) eingelernt ist, erstreckt und eine dritte Koordinatenachse desselben sich senkrecht zu den ersten und zweiten Koordinatenachsen erstreckt.

3. Korrekturverfahren zum Korrigieren eines geometrischen Orts nach Anspruch 1 oder 2, bei dem in Schritt (d) eine inverse Umsetzung in einer korrigierten Position des Arbeitspunkts ausgeführt wird, um Betriebsbedingungen von individuellen Achsen des Roboters zum Erreichen der korrigierten Position zu bestimmen, und die individuellen Achsen derart getrieben werden, daß Betriebsbedingungen derselben identisch mit den auf diese Weise bestimmmten Betriebsbedingungen sind.

4. Korrekturverfahren zum Korrigieren eines geometrischen Orts nach Anspruch 1, 2 oder 3, bei dem die Erfassung der Abweichung in Schritt (b) durch Benutzung eines Sensors ausgeführt wird, dessen Erfassungsfeld zumindest die augenblickliche Bewegungsposition des Arbeitspunkts und einen Teil des Zielbewegungsorts dicht dabei abdeckt.

## Revendications

1. Un procédé de correction des lieux géométriques d'un robot industriel, comprenant les opérations consistant à :

(a) enseigner un lieu géométrique (L) de mouvement recherché d'un point de travail du robot, en utilisant un système de coordonnées de référence (X, Y, Z) ;

(b) actionner ensuite le robot pour suivre le lieu géométrique (L) enseigné de mouvement recherché sur une pièce d'ouvrage tout en détectant une erreur entre une position de déplacement actuelle du point de travail et le lieu géométrique (L) de mouvement recherché ;

(c) convertir l'erreur détectée dans ladite opération (b) en une valeur de correction dans le système de coordonnées de référence (X, Y, Z) ; et

(d) corriger la position du point de travail en utilisant ladite valeur de correction ;

caractérisé en ce que :

dans l'opération (a), le système de coordonnées de référence (X, Y, Z) est un système de coordonnées fixe ;

ladite opération du robot dans laquelle le robot suit le lieu géométrique (L) enseigné de mouvement recherché, tout en détectant une erreur entre une position de déplacement actuelle du point de travail et le lieu géométrique (L) de mouvement recherché, est une opération dans laquelle le robot agit sur la pièce d'ouvrage et dans laquelle les opérations (b), (c) et (d) sont effectuées ensemble ;

ladite erreur est détectée périodiquement au fur et à mesure que le point de travail du robot se déplace le long dudit lieu géométrique (L) de mouvement recherché alors que le robot agit sur ladite pièce d'ouvrage ;

dans l'opération (b), ladite erreur est détectée en utilisant un système de coordonnées prédéterminé (Xr, Yr, Zr), différent dudit système de coordonnées fixe (X, Y, Z), défini par la position de déplacement actuelle et la direction de déplacement actuelle du point de travail ; et

dans l'opération (c), ladite erreur avant la conversion est représentée dans ledit système de coordonnées prédéterminé (Xr, Yr, Zr).

2. Le procédé de correction des lieux géométriques selon la revendication 1, dans lequel ledit système de coordonnées prédéterminé est réglé de telle manière qu'une origine de ce dernier coïncide avec la position de déplacement actuelle du point de travail, un premier axe de coordonnées de ce dernier s'étend dans la direction de déplacement actuelle du point de travail, un second axe de coordonnées de ce dernier s'étend dans une direction perpendiculaire au lieu géométrique de mouvement recherché enseigné dans ladite opération (a), et un troisième axe de coordonnées de ce dernier s'étend perpendiculairement auxdits premier et second axes de coordonnées.

3. Le procédé de correction des lieux géométriques selon la revendication 1 ou 2, dans lequel, dans ladite opération (d), on effectue une conversion inverse sur une position corrigée du point de travail pour déterminer des conditions de fonctionnement d'axes individuels du robot afin d'obtenir ladite position corrigée, et les différents axes sont entraînés de telle manière que leurs conditions de fonctionnement soient identiques aux conditions de fonctionnement ainsi déterminées.

4. Le procédé de correction des lieux géométriques selon la revendication 1, 2 ou 3, dans lequel on effectue la détection de l'erreur dans ladite opération (b) en utilisant un détecteur dont le champ de vision couvre au moins la position de déplacement actuelle du point de travail et une partie du lieu géométrique de mouvement recherché proche de celle-ci.

# FIG.1

# FIG.2

# FIG.3

START

(J)

**READ ONE BLOCK** — S1

**CALCULATE TOTAL NUMBER OF INTERPOLATION POINTS FROM SPEED AND LOCUS LENGTH** — S2

$i \leftarrow 1$ — S3

$i > N$ — S4

YES →

NO ↓

**DETERMINE i-TH INTERPOLATION POINT Pi(Xi, Yi, Zi) FROM SPEED AND INTERPOLATION PERIOD** — S5

**READ CORRECTION DATA (Xr, Yr, Zr)** — S6

**DETERMINE CORRECTION AMOUNTS (Xr', Yr', Zr') IN FIXED COORDINATE SYSTEM** — S7

**DETERMINE CORRECTED INTERPOLATION POINT Pi'** $Pi'=(Xi+\Sigma xr', Yi+\Sigma yr', Zi+\Sigma zr')$ — S8

**OUTPUT CORRECTED INTERPOLATION POINT Pi' AFTER INVERSE CONVERSION** — S9

$i \leftarrow i + 1$ — S10

**READ CORRECTION DATA (Xr, Yr, Zr)** — S11

**DETERMINE CORRECTION AMOUNTS (Xr', Yr', Zr') IN FIXED COORDINATE SYSTEM** — S12

**CALCULATE CORRECTED END POINT Pe' FROM CORRECTION AMOUNTS AND POSITION Pe' (Xe, Ye, Ze)** — S13

$Pe'=(Xe+\Sigma xr', Ye+\Sigma yr', Ze+\Sigma zr')$

**OUTPUT CORRECTED END POINT Pe' AFTER INVERSE CONVERSION** — S14

(J)

# FIG.4